# EUROPEAN PATENT APPLICATION

(11) **EP 2 333 709 A1**
(43) Date of publication of application: **15.06.2011**
(21) Application number: 09179032.9
(22) Date of filing: 14.12.2009
(51) Int. Cl.: G06Q 30/00

(54) **Methods and arrangements for designing and producing an appearance of an object**

(71) Applicant: Hanna C. & Co., 02750 Espoo (FI)
(72) Inventor: Chaker, André, 02750, ESPOO (FI)
(74) Representative: Brax, Matti Juhani

(57) **Abstract**

For designing an appearance of an object, an automated reading apparatus reads an identifier of said object. A database query is made that contains the read identifier, or some identifying information derived therefrom. A database response contains information of at least one further characteristic of said object. A template of a label is displayed so that at least one characteristic of it matches said further characteristic of said object. User input is received indicative of a desired appearance of a physical label corresponding to the displayed template. The template is displayed in conformity with the indicated desired appearance. An order is made for said physical label, said order indicating the characteristics and appearance of the ordered physical label as they were displayed.

## Description

### TECHNICAL FIELD

This invention is related to the technical field of designing and producing a groomed and uniform appearance for an object that is meant to be stocked together with a number of similar objects. Especially the invention relates to a way of automatizing the process and gaining additional advantages of the application of computer networks.

### BACKGROUND OF THE INVENTION

Objects and items such as books, CD cases, DVD cases, binders, journals and the like are usually stocked on shelves or boxes, where they are aligned in rows or stacked in columns. The form of such objects is often roughly that of a rectangular prism, and they are arranged on the shelf or in the box so that the so-called spine of each object remains visible. In the following we consider books as an example of such objects, but throughout this description the same considerations are equally applicable to all objects that share the same commonly defined characteristics.

With the exception of book series and large books that come in a number of volumes, the outer appearance of each book is typically very different. When a number of books are stocked on a shelf, the overall impression becomes easily somewhat disorganized, because books of different size, shape, colour and text font on the spine are standing next to each other.

A known solution for providing some degree of uniformity to the books stocked on a shelf is to employ cardboard casings into which each book can be separately slipped. If the casings are manufactured as a series with common design guidelines, and they are kept on the shelf so that the spines of the casings - and not those of the books - are visible, the result looks quite uniform. However, if the casings are not manufactured and distributed along with the books themselves, tailoring a set of casings for a previously formed collection of books would become both costly and cumbersome.

Another known prior art solution is known as Dummy Books, and available from Relics of Witney Ltd, 35 Bridge Street, Witney, England. The solution is based on providing separate fake book spines or panes consisting of a number of adjacent fake book spines, which come complete with the appeaeance of the original spine of some literally classic. Information about the Dummy Books solution is available at http://www.dummybooks.co.uk/Introduction.htm at the time of writing this description.

Another known prior art solution is known as Faux Books, and available from Faux Books, Part of The Original Book Works Ltd, 1 Wilkinson Road, Cirencester, England. The solution is not meant for changing the appearance of collectable item, but for using cut-out spine parts of discarded real books to make doors or wall elements imitate the appearance of a book shelf. Information about the Faux Books solution is available at http://www.fauxbooks.co.uk/ at the time of writing this description.

### SUMMARY OF THE INVENTION

One advantageous feature of certain embodiments of the present invention is the provision of a method and an arrangement with which the appearance of an existing collection of collectable objects can be tailored in an effective and cost-conscious manner. An advantageous feature of certain embodiments of the present invention is the provision of a method and an arrangement that can additionally be used to create and maintain additional value in the form of information products. Other advantageous features of embodiments of the present invention are explained in the following description.

In a number of advantageous embodiments of the invention there are provided stickers or labels that cover at least a major portion of the spine or other part of the collectable object. Existing knowledge in electronic form about certain features of the collectable object are advantageously used in creating the sticker or label for it.

A method according to an advantageous embodiment of the invention is characterised by the features recited in the characterising part of the independent claim directed to a method.

An arrangement according to an advantageous embodiment of the invention is characterised by the features recited in the characterising part of the independent claim directed to an arrangement.

Other advantageous embodiments of the invention are described in the depending claims.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

### BRIEF DESCRIPTION OF DRAWINGS

- Fig. 1: illustrates attaching a sticker to a book,
- fig. 2: illustrates attaching a sticker to a book,
- fig. 3: illustrates attaching a sticker to a book,
- fig. 4: illustrates attaching a sticker to a book,
- fig. 5: illustrates attaching a sticker to a book,
- fig. 6: illustrates attaching a sticker to a book,
- fig. 7: illustrates some steps of a method according to an embodiment of the invention,
- fig. 8: illustrates some steps of a method according to an embodiment of the invention,
- fig. 9: illustrates some steps of a method according to an embodiment of the invention,
- fig. 10: illustrates a method according to an embodiment of the invention,
- fig. 11: illustrates a software program product according to an embodiment of the invention,
- fig. 12: illustrates an apparatus according to an embodiment of the invention, and
- fig. 13: illustrates a server for interworking with the apparatus of fig. 12 for implementing a method according to an embodiment of the invention.

### DETAILED DESCRIPTION OF THE INVENTION AND ITS ADVANTAGEOUS EMBODIMENTS

In the following description we consider a book as an example of a generally rectangular object that can be stocked on a shelf, in a box, or otherwise so that when a number of objects of roughly the same kind are put next to each other, an edge known as the spine of each object remains visible. The same description applies to all kinds of such objects, with the exception that the so-called unique identifier may appear in a different form in different kinds of objects. Concerning books, a typical example of the unique identifier is the ISBN (International Standard Book Number), which can be represented as a numeric string, a bar code, or both. Unique identifiers encountered in other kinds of collectable objects include, but are not limited to, the ASIN (Amazon Standard Identification Number); the CODEN (serial publication identifier currently used by libraries, which has been replaced by the ISSN for new works); the DOI (Digital Object Identifier); the ISAN (International Standard Audiovisual Number); the ISMN (International Standard Music Number); the ISRC (International Standard Recording Code); the ISSN (International Standard Serial Number); the ISWC (International Standard Musical Work Code); the LCCN (Library of Congress Control Number); the OCLC (Online Computer Library Center) code; and the SICI (Serial Item and Contribution Identifier).

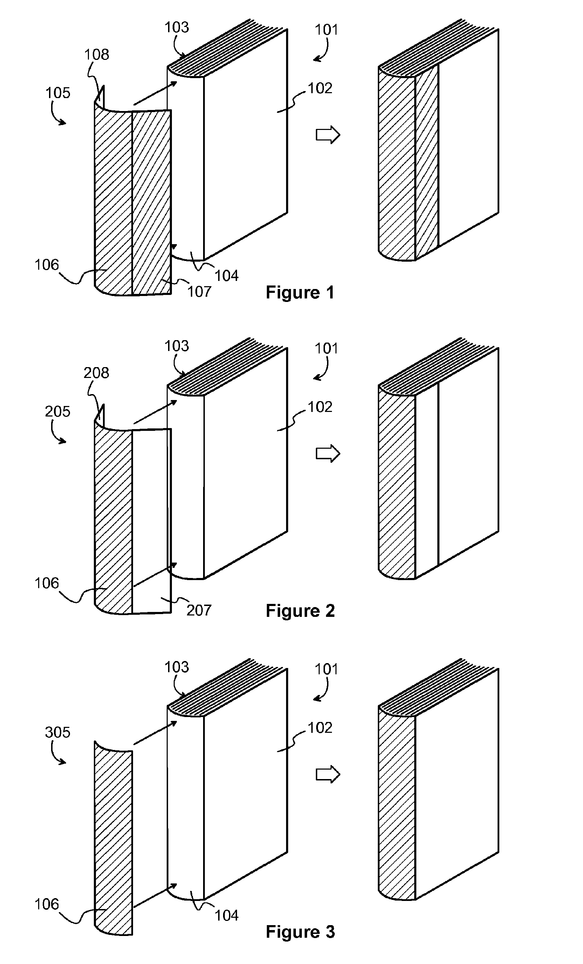

Fig. 1 illustrates a book 101, the outer apperance of which was originally decided by a bindings designer at the time when the book was printed. The form of a book is generally that of a rectangular prism, with the front cover of the book defining a relatively wide front surface 102 and the back cover defining an equally sized back surface 103. The side surfaces are typically much narrower than the front and back surfaces, as their width is defined by the thickness of the book. Taken that a majority of books have their sides in the so-called portrait orientation, the two side surfaces that are illustrated as vertical in fig. 1 are longer than the two others. In landscape-oriented books the relative lengts of the side surfaces are the other way round. One of the side surfaces, which in fig. 1 is one of the longer side surfaces, comprises the spine 104, which joins the back and front covers together and hides the stitches, the glue, and/or other means that are used to hold the pages of the book together.

It is customary to line up books on a shelf so that their spines are visible next to each other in a row. According to an embodiment of the present invention, there is provided a label, which can be used to attach to and cover at least the spine of the book. Since attaching is particularly easy if the label comprises a layer of sticky glue on that side that comes against the book, we may also designate the label with the name sticker 105. The left part of fig. 1 illustrates attaching the sticker 105 to the book, and the right part of fig. 1 illustrates the resulting book with the sticker attached to it. A spine part 106 of the label or sticker is essentially equal in size with the spine 104 of the book and covers it at least to an extent that a human observer would consider the appearance of the sticker-covered spine of the book to be primarily determined by the sticker and not the original spine. An obvious limiting case of this definition is the one where an opaque spine part 106 of the sticker is exactly equal in size with the spine 104 of the book, and thus covers it completely. At the other end of the scale we might consider a sticker that only covers a part of the original spine 104 of the book, but contains visible indicia that are prominent enough to make a human observer perceive a number of adjacent book spines with such stickers on them to have "something in common".

In the embodiment of Fig. 1 the label or sticker has, in addition to the spine part 106, a front part 107 and a back part 108, each of which forms an extension from one longer side edge of the spine part 106. When the sticker is attached to the book 101, the front part 107 is attached to and covers a part of the front surface 102 of the book. Similarly when the sticker is attached go the book 101, the back part 108 is attached to and covers a part of the back surface 103 of the book. Since books are in many cases ordered on the shelf so that their spines are aligned, the front and back parts of the sticker do not contribute very much to the appearance of the stocked book, unless the book is at the open end of a row, and/or significantly higher than a number of adjacent books. Therefore, if a particular overall appearance of a book shelf is aimed at, the appearance of the front and back parts are not as important as the appearance of the spine part 106. In fig. 1 we assume that the front and back parts of the sticker are of the same opaque material as the spine part, but if a minimum effect on e.g. the appearance of the original front cover of the book is aimed at, the front part may be designed to be identical to that part of the original front cover that it hides.

Figs. 2 to 6 illustrate some exemplary alternatives to the basic approach explained above. In fig. 2 the sticker 205 is otherwise identical to the sticker 105 illustrated in fig. 1, but the front part 207 and back part 208 of the sticker 205 are transparent, so that when the sticker 205 is attached to the book 101, the spine part 106 changes the appearance of the book when looked from the direction of the spine, but the front and back covers remain the same as in the original appearance of the book. In fig. 3 the sticker 305 consists of only the spine part 106. Making the sticker to only cover the whole or a part of the spine helps to save material costs and to maintain the original appearance of the front and back covers of the book. However, having the sticker to comprise at least one of a front part and a back part in addition to the spine part may help to keep the sticker firmly in place especially when the book is repeatedly opened and closed during reading.

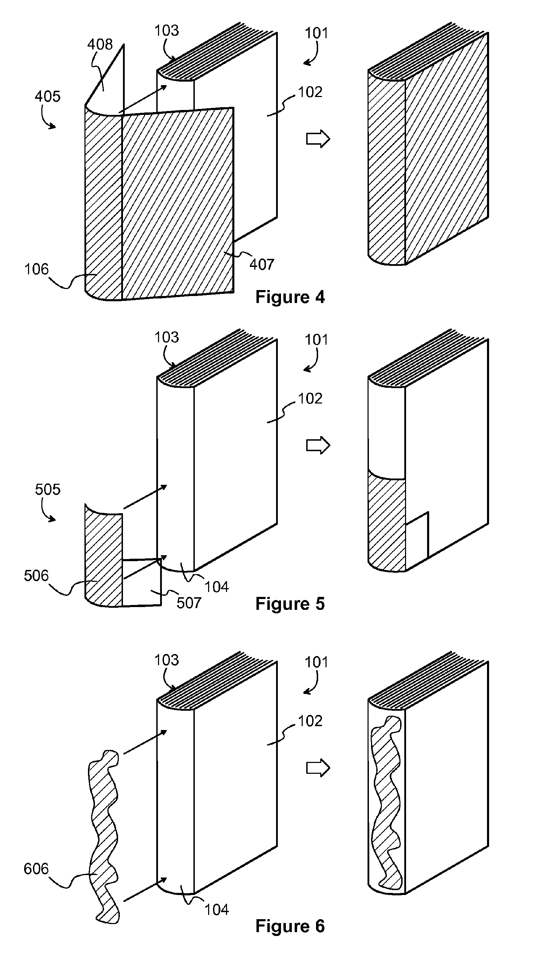

Fig. 4 illustrates a case in which the sticker 405 has a front part 407 and a back part 408 that are large enough to completely cover the front side 102 and back side 103 of the book 101 respectively. In this case a whole new cover design can be introduced with the sticker, or at least one of the front and back parts of the sticker 405 may be designed to faithfully imitate the original cover design of the book. Fig. 5 illustrates an exemplary embodiment in which the spine part 506 of the sticker 505 does not cover the whole height of the spine 104 of the book 101, and also where the front and back parts of the sticker (of which the front part 507 is visible) have a different height than the spine part 506. Fig. 6 illustrates an embodiment where the sticker only consists of a spine part 606, which has both a form and dimensional extents that are not the same as those of the spine 104 of the book 101.

The variations shown in figs. 1 to 6 can be combined freely. For example, the sticker may have a transparent front part like that of fig. 2, but which extends to cover the whole front surface of the book like in fig. 4, and simultaneously an opaque back part like that of fig. 1 but which has a different height than the spine part like in fig. 5. Many other alternative combinations are also possible.

A typical book owner will possess a number of books, which come in a variety of sizes, shapes, and outer designs. A typical book owner might also have a number of storage locations, like one book shelf in the living room and another in the master bedroom. In order to create a groomed and uniform appearance for a number of books, possibly stocked in a number of storage locations, the user would need a number of stickers, each fitting snugly on the book it is meant for. Additionally the stickers meant for books that are stocked together at one location should conform to each other in appearance, while another set of completely different looking stickers might be needed for the other storage location. Room interiors and personal taste vary very much, so in order to fulfil the needs of a large number of consumers, a large degree of freedom should be give for designing and manufacturing the stickers. Still especially the method for designing the stickers should offer a simple, fast, easy, and straightforward way to proceed, so that an ordinary consumer would not be forced to spend very much time and effort on designing the stickers for his books.

A key to significantly streamlining the process of designing stickers for a number of books is the insight that
- for a relatively long time already, unique identifiers have been given to books;
- the identifier typically appears in the book in a printed form that can be read with an automated reading apparatus; and
- databases exist that link the book identifiers with book characteristics that are useful for designing an appropriate sticker.

Before going any further with books, it is worth noting that these listed features also apply to many other collectable items, for example CD cases, DVD cases, binders, journals and the like, to which the invention is also applicable.

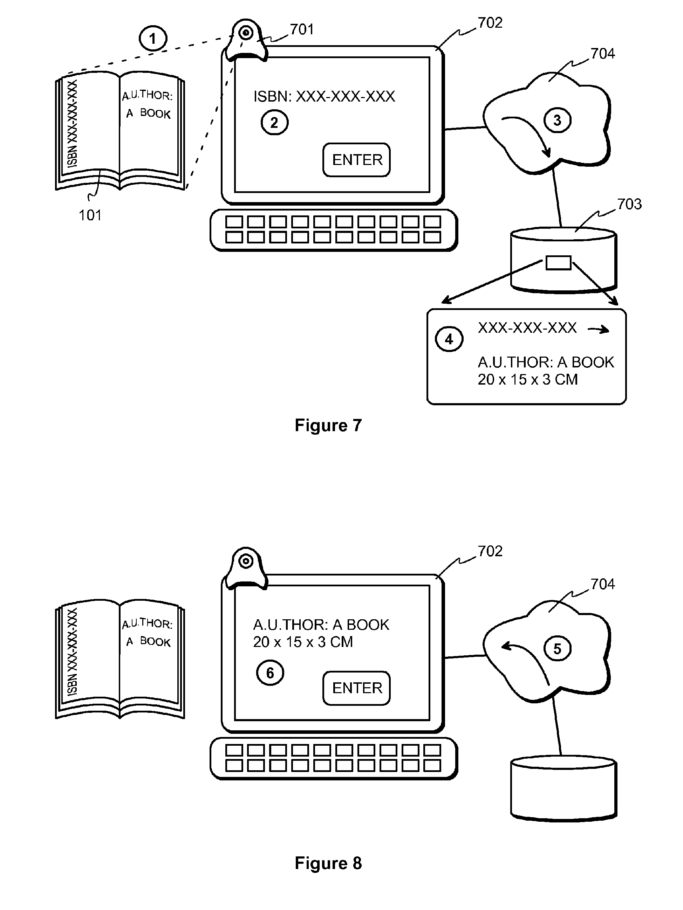

A method for designing an appearance of an object to be stocked according to an embodiment of the invention is explained in general with reference to figs. 7, 8, and 9. The first step illustrated in fig. 7 corresponds to having an automated reading apparatus 701 read an identifier of an object, which in this case is a book 101. Here the automated reading apparatus 701 comprises an optical reader, for example a digital camera, that is coupled to or built as a part of a computer 702. Many people already have a so-called webcam coupled to their home computer, which can be used as an optical reader. Other suitable optical readers are separate or phone-integrated digital cameras that can be coupled to a computer or from which the digital photo files can be transferred to a computer on a detachable memory module. Scanners, hand-held scanner pens, barcode readers, magnetic media readers, or RFID (Radio Frequency Identifier) readers could be used as other kinds of automated reading apparata.

Printed in the book 101 are various pieces of information that can be used as identifiers, for example the title of the book, the name of the author, and the ISBN. In this case we assume that the ISBN is used as an identifier. The second step illustrated in fig. 7 corresponds to an OCR (Optical Character Recognition) program in teh computer 702 recognizing the ISBN from the input data acquired by the automated reading apparatus 701, and displaying the recognized ISBN on the screen so that a human user can verify that the ISBN has been correctly recognized. This second step, however, is not necessary for the invention, which can quite as well proceed automatically to the third step.

The third step illustrated in fig. 7 corresponds to the computer 702 forming and transmitting a database query that contains either the read identifier (the ISBN) or some identifying information derived therefrom. As an example of such derived identifying information, we may consider a case in which the read ISBNs are not transmitted in cleartext but in some ciphered or scrambled form, in order to ensure that a potential eavesdropper can not find out, what is being transmitted. In fig. 7 we assume that the database 703 to which the database query is transmitted is neither a part of the computer 702 nor locally accessible, for which reason the database query is transmitted through a network 704, which is for example the Internet. As a natural alternative, if the database is accessible through a local area network or even in the computer 702, the database query can be transmitted through such other network or even through an internal bus of the computer 702.

The fourth step illustrated in fig. 7 corresponds to the database 703 (or, more exactly: a computer device capable of making searches in the database 703) mapping the received identifier or other identifying information into other data that is stored in the database. In this exemplary case the database 703 contains information, according to which the received identifier is unique to the book "A Book" by A.U.Thor, which has been commercially available in a hardback edition measuring 20 cm in height, 15 cm in width, and 3 cm in thickness. These pieces of information, which the database 703 found by using the received identification information as a key, are here called further characteristics of the object (i.e. the book 101).

The fifth step, which is illustrated in fig. 8, corresponds to the computer 702 receiving a database response, which contains information of at least one of said further characteristics of the book 101. Since the response comes from the same database to which the database query was previously transmitted, it is natural to assume that it is received through essentially the same route, e.g. the Internet 704. The sixth step illustrated in fig. 8 corresponds to displaying said information of at least one of said further characteristics to the user, in order to indicate that a database response has been received. This is again an optional step, and the method could as well proceed automatically to the next step.

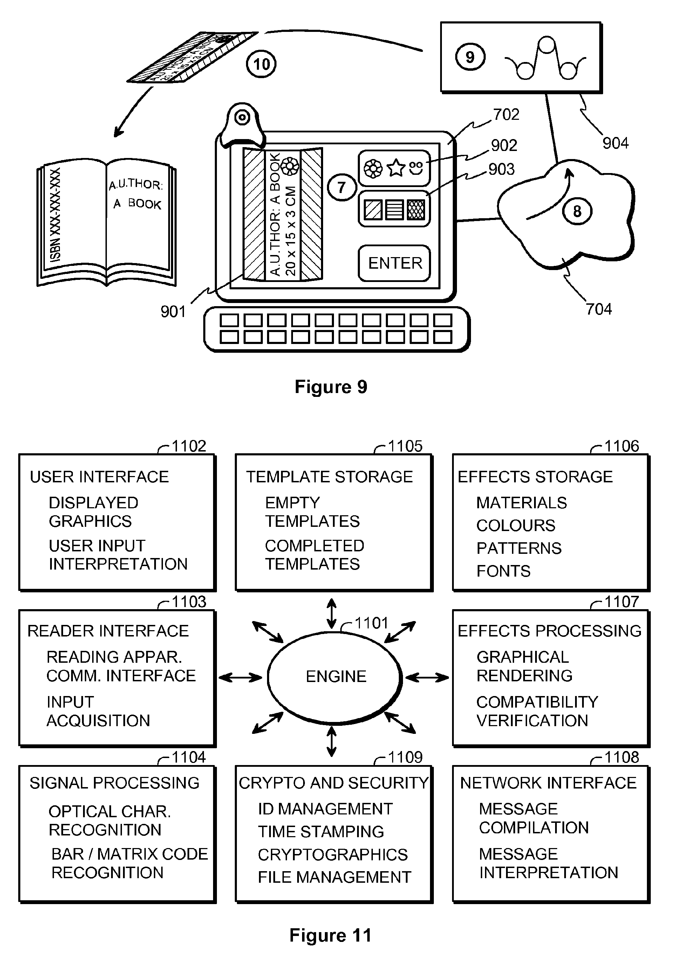

The seventh step, which is illustrated in fig. 9, corresponds to the computer 702 displaying a template 901 of a label or sticker. At least one characteristic of the label or sticker is displayed to match at least one of the further characteristics of the object, which were received in the database response. In fig. 9 the label or sticker is displayed to have the title of the book and the name of the author printed on the spine part of the label or sticker, and the dimensions of the label or sticker as displayed so that they match the information of the physical dimensions of the book that were received in the database response.

This phase of the method illustrates very clearly how the process has been streamlined compared to any painstakingly laborious prior art process that might have existed and involved inputting data by hand. Instead of having to type in the (potentially very long) character strings that represent the author and title, and instead of having to measure by hand and type in the dimensions of the book, the user has simply brought an appropriate part of the book into the field of view of his webcam, and commanded the program running on his computer to take care of the rest. The program has found and recorded the ISBN or other identifier and used it to download a large number of features that are readily applicable for designing a label or sticker for that book. All this has been achieved with hardware that is already available as such at many consumers' premises.

The seventh step illustrated in fig. 9 further comprises receiving user input indicative of a desired appearance of a physical label or sticker corresponding to the displayed template, and displaying the template in conformity with such indicated desired appearance. The program offers the user various ways of customizing the appearance of the displayed label or sticker. As examples, fig. 9 shows a graphical elements palette 902, from which the user can drag and drop graphical elements to desired locations of the displayed label or sticker, as well as a colours and patterns palette 903, from which the user can select colours and/or patterns to various parts of the displayed label or sticker. Features of the displayed label or sticker that the user can modify may include, but are not limited to the following: the number, contents, size, and location of the text fields; the font, size, and alignment used for the text items in the fields; the background patterns and colours of various parts of the label or sticker; the physical dimensions and opaqueness or transparency, as well as the material and texture of various parts of the label or sticker; the appearance, size, colour, and displaying order of various graphical elements on the label or sticker; and special effects such as gilding, perforation, edge finish, selection of glue (permanent/detachable) or even scent.

The eighth step illustrated in fig. 9 corresponds to forming and transmitting an order for a physical label or sticker. It is assumed that the physical labels or stickers will be manufactured centrally at a printing house 904 or corresponding industrial enterprise. The order is therefore again most practically transmitted through the Internet 704, although other forms of transmission are not excluded, such as transmitting the order to a printer from which it is carried on to the printing house 904 via ordinary mail. The order indicates the characteristics and appearance of teh ordered physical label as they were displayed when the user gave the input command that represented accepting the displayed template of the label or sticker. Significant streamlining of the process can again be achieved if the order is transmitted in a machine-readable electronic form that a control computer at the printing house 904 can directly accept and convert to control commands that control the operation of the printing machinery. In fig. 9 it has been conceptually assumed that the printing house is a different party than the one who maintained the database, by displaying it in a different part of the drawing, but these two parties may naturally be also the same party.

The ninth step illustrated in fig. 9 corresponds to manufacturing the physical label or sticker at the printing house 904, and the tenth step also illustrated in fig. 9 corresponds to delivering the manufactured physical label or sticker to the customer who ordered it. Although the process illustrated in figs. 7, 8, and 9 has considered the ordering of only a single label or sticker for clarity, it is easy to understand that the efficiency of the streamlined process exhibits the full extent of its advantages in a case where the consumer has a number of books or other objects for which he wants to create and order labels or stickers. In such a case various parts of the process can be run as batch processing, for example so that the user first makes his computer read in the identifiers of all objects, then a combined database query is made for all recorded identifiers, then the labels or stickers are jointly and/or consecutively designed for a number of objects, and finally an order is formed and transmitted for all physical labels or stickers. Designing a number of labels or stickers during a single session makes it particularly easy to recycle details of a well-made design to other labels or stickers also, which further enhances the possiblity of creating personal, yet conformant stickers or labels for one's whole personal library.

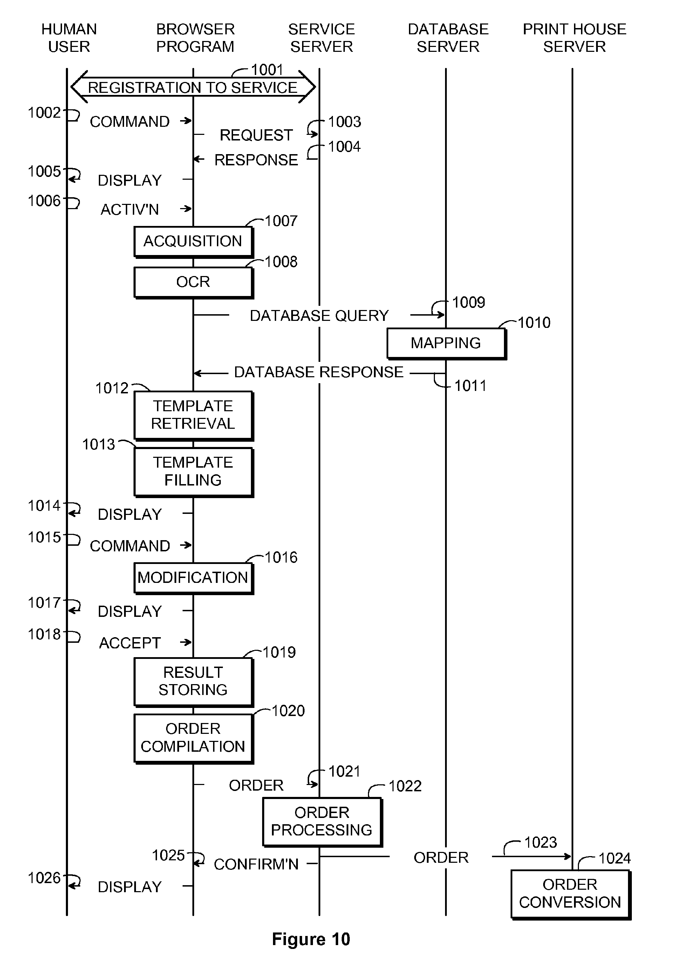

Fig. 10 is another exemplary schematic representation of a method according to an embodiment of the invention. It illustrates especially an example of operations performed by a human user, a browser program running in a computer available for the human user, a service server, a database server, and a print house server, as well as certain communications between said entities.We use the designation "label" to refer to labels, stickers, and the like, which are meant to be used for producing a desired appearance for collectable objects. We assume that the service server is a network-coupled computer that is configured to centrally run certain programs that offer the service of designing and manufacturing customized labels to a large number of potential customers.

We also assume that the browser program is one that is capable of downloading and running executable code, for example in the form of Java applets, so that there would not exist any need to permanently install any specific client program on the user's own computer. Naturally the invention does not exclude client-server-based embodiments either. Fig. 10 can be understood to illustrate also a client-server based embodiment so that the term "browser program" would just be taken to read "client program" instead. In the following when we say that the browser program performs an operation, we mean in general that an operation is performed in the user's computer by executing machine-readable instructions that are either part of the actual browser program, have been downloaded through actions of the browser program for execution at the user's computer, or are otherwise executed directly or indirectly at the initiative of the browser program. The user would typically the displayed results of such operations as appearing in the browser window.

Step 1001 is optional and represents a phase where the human user registers him- or herself as a registed user of the service. Registration may take place by using the browser program, but also other forms of registration are possible; including but not being limited to registration by email, by ordinary mail, or orally per telephone or on the spot at a service desk. After registration the user knows how to start the service, and the service server has set up a user account for the user. If using the service necessitates some configuration steps, e.g. selecting a type of webcam or other image acquisition means that the user has at his or her disposal, such configuration measures may be considered to be included in the registration step or they may be performed as a separate step (not shown) before actual data acquisition begins.

At step 1002 the user gives the browser program a command to start using the service. The command may take the form of e.g. typing a network address of the service server on an address line of the browser program, and when a front page of the service appears, clicking on a "start service" icon or button. As a response to the starting command, the browser program sends at step 1003 a request to the service server, requesting a web page that comprises the necessary Java applets to perform the following operations. The requested material is delivered from the service server to the browser program at step 1004.

At step 1005 the browser program displays to the user an indication that it is ready to start data acquisition. As an example, the browser program may display a prompt "start acquisition by showing a book to the webcam". At step 1006 the human user activates data acquisition for example by placing a book into the field of view of his webcam and clicking a "take image" icon.

Data acquisition at step 1007 corresponds to having an automated reading apparatus read an identifier of the object that has been made available to it. For example, commanded by a Java applet run by the browser program, the webcam or other digital camera takes a picture of a page of the book that contains the International Standard Book Number as a character string. OCR at step 1008 corresponds to running an optical character recognition program to recognize the characters of the International Standard Book Number. Here "recognizing" is taken to comprise the step of creating an ASCII- or other standard digital representation of teh character string.

In the embodiment of fig. 10 we assume that successfully recognizing a character string automatically triggers forming and transmitting a database query that contains the recognized character string or some identifying information derived therefrom. This is illustrated as step 1009. The database query can be transmitted from the browser program directly to the database server, or it can be transmitted to the service server, which then directs it to an appropriate database server for example depending on the type of identifier that is contained in the database query. The last-mentioned alternative has the advantage of not requiring any program at the user's computer to know the network addresses of any database servers.

Step 1010 corresponds to the database server mapping the information that it received in the database query into other data that is stored in the database, for example information about the author, title, and/or physical dimensions of the book. Step 1011 corresponds to returning such other data to the browser program, again either directly or via the service server, as a database response. From the viewpoint of the browser program the returned data is information of at least one further characteristic of the object.

Step 1012 represents a phase at which the browser program retrieves a basic template from a storage location for use as a starting point in designing the label. Although displayed here as a local operation, which would mean that the basic template was stored at the user's computer, the browser program may also retrieve the basic template from e.g. the service server or a separate template server (not shown). Step 1013 corresponds to the browser program making the basic template reflect some of the data received from the database server, for example by inserting the name of the author and the title of the book into text fields of the template. Step 1014 corresponds to displaying the template of a label so that at least one characteristic (text content, physical dimension, etc.) of the template is displayed to match a further characteristic of the object as received in the database response. If it happened that a single identifier could be mapped into a number of data sets, e.g. if a single ISBN refers to multiple editions of the same book, step 1014 may comprise displaying a number of templates, each of which is displayed to match a further characteristic of one of the mutually alternative object as received in the database response.

We assume that the user was not completely satisfied with the first displayed version of the filled template, for which reason the user gives a command to change something at step 1015. Step 1016 corresponds to the browser program making a corresponding modification, for example changing the colour of one part of the displayed template, and step 1017 corresponds to displaying the result. A large number of repetitions of steps 1014, 1015, 1016, and 1017 may follow, until the user is satisfied with the displayed template. Each received user input is indicative of a desired appearance of a physical label corresponding to the displayed template, and after receiving each such input the browser program displays the template in conformity with the indicated desired appearance. Naturally it may also happen that the user is immediately satisfied with the displayed template at step 1014, so that steps 1015,1016, and 1017 are omitted altogether.

Step 1018 corresponds to receiving from the user a command that expresses acceptance, i.e. that the user is satisfied with the currently displayed appearance of the template. At step 1019 the browser program initiates storing the completed template locally. Although the physical sticker will most advantageously be produced elsewhere than at the user's own premises, it is advantageous to store and keep a copy of a the machine-readable description thereof stored also locally or at some other personal digital data storage that is available to the user. For example, if the user wants to later use one of his or her previous designs as a reference or starting point for designing another sticker, it is easiest to retrieve the previous design if it exists stored in some personal digital data storage of the user. The own copy of the user also serves as a reference, if it must be checked later, what was the intended order of the user, or who was the original designer of a sticker or template that later was used also by others. For this purpose it might be advantageous if the storing at step 1019 involved a cryptographic operation that involved at least one of: time-stamping the stored file in a secure manner; calculating and storing a cryptographic checksum or other kind of authentication code of the contents of the file; digitally signing the stored file in a way that associates it with the user who initiated the storing; or producing a "vault copy" that is locked so that not even the original user is allowed to make any changes to it later.

Step 1020 corresponds to the browser program compiling an order for the physical sticker, i.e. forming an order for said physical label so that the order indicates the characteristics and appearance of the ordered physical label as they were displayed and accepted by the user. Step 1021 corresponds to the browser program transmitting the order. In this embodiment we assume that the order is transmitted to the service server, which processes the order at step 1022. As an alternative or addition to the local storing (and possible cryptographic operations) at step 1019, the processing of the order at step 1022 may include storing an electronic description of all ordered stickers as a part of the user account that the user has on the service server. Storing a copy at the service server is especially advantageous if the service is to be employed as a social medium, for example by sharing experiences and designs with others.

Also, as a part of the processing at step 1022, the service server calculates the amount of money or other form of compensation needed to pay for producing the physical stickers according to the order. A variety of ways for effecting the payment are possible. For example, the service server may compile and print out an invoice, which is e-mailed or mailed to the user. Alternatively the user's user account may include a number of credit points, which the user has previously bought, and payment for the current order is effected by deducting the number of credit points. If the user has properly authorized the service to make deductions directly from a bank account or the like, that is also possible. The service server may also initiate a payment routine that temporarily redirects the user's network connection to the net payment service of a bank or other financial institution. Paying for products and services ordered through a computer network is a well-established field of technology by itself, and for the purposes of the present invention it is not important, what form of payment (if any) is employed.

Step 1023 corresponds to the service server forwarding the order to the printing house server, and step 1024 corresponds to the last-mentioned converting information contained in the forwarded order into some form that is applicable for controlling the printing and other operations performed at the printing house. Fig. 10 also illustrates the optional steps of sending a confirmation of a forwarded order back to the browser program at step 1025 and displaying an indication of the confirmation to the user at step 1026.

Batch processing, i.e. designing and ordering a multitude of stickers in one go, may be dealt with with a number of at least partially mutually alternative changes to the method illustrated in fig. 10. We may first analyse the aim of reading the ISBNs or other identifiers of a multitude of objects before proceeding to designing the corresponding stickers. This may be done e.g. so that at the end of successful optical character recognition at step 1008 the browser program displays an indication that OCR has succeeded, and asks the user to either present another object for reading (which would essentially mean a return to step 1005) or to continue by initiating the transmission of a database query. When a command is received from the user indicating that all desired objects have been dealt with, a combined database query would be sent at step 1009. As an alternative, successful OCR at step 1008 might automatically trigger the database query of step 1009, and after receiving the database response of step 1011 the browser program would display the results of the database query and action alternatives like "cancel and try reading the same object again"; "cancel and type in the ISBN by hand", "confirm and proceed to reading another object"; and "confirm and proceed to displaying the first template". The first two of these are self-explanatory. If the user selected the third action alternative, the result of the previous database response are stored into a batch file that waits the step of displaying templates, and a return occurs to step 1005.

Similarly there are various batch processing alternatives in the phase of designing and ordering the stickers. One alternative is to display, at the end of step 1019, the action alternatives "results stored, design another"; and "results stored, proceed to order". The first-mentioned would mean returning to step 1012, and the other continuing to step 1020. Another alternative is to send each completed design directly to the service server, i.e. always continue all the way to step 1022, and only thereafter ask the user, whether he or she wants to return to step 1012 for designing another sticker. Only when the service server has received from the browser program an indication that the user has completed the current order, the service server would proceed to forwarding the completed order to the printing house at step 1023.

Fig. 11 illustrates an example of a software program product, which comprises machine-readable instructions that, when executed on a processor, implement the execution of a method according to an embodiment of the invention. An engine component 1101 is responsible for the communication between parts of the program and overall execution of the program. A user interface part 1102 comprises for example the descriptions of how the displayed graphics should look like on the screen, and how user inputs such as mouse clicks and key presses should be interpreted. A reader interface part 1103 comprises for example the reading apparatus command interface required to control the operation of e.g. an associated webcam or memory card reader, as well as instructions for input acquisition that control in which form the digital photograph or other input received from the automated reading apparatus should be made available to the signal processing part.

The signal processing part 1104 comprises for example the optical character recognition or bar or matrix code recognition instructions, with which it becomes possible to recognize the identifier from the input information acquired with the automated reading apparatus, and to convert it into electronic form. In some embodiments of the invention the identifier may be wirelessly readable e.g. from an RFID tag, in which case receiving the identifier with the automated reading apparatus already means receiving it in electronic form, and the signal processing part 1104 becomes a triviality.

The template storage part 1105 comprises for example the storing capability for empty templates and completed templates. Here the expression empty template means a template that has been previously stored in some generic form and is not specific to any particular book or other object. An empty template may have a some graphical elements already determined, like colours, ornaments, and material parameters, but these should all be e.g. scalable in size so that if that empty template is selected for use in association with a very large book, the basic form of the graphical elements can be scaled along when the dimensions of the template are scaled to meet the known dimensions of the book. A completed template is one which has been tailored to meet the characteristics of a book, for example by inserting the title and author of the book and setting the physical dimensions to meet the known dimensions of the book.

The effects storage part 1106 comprises for example instructions about what kind of materials, colours, patterns, fonts, ornaments, etc. can be selected for templates. The effects processing part 1107 comprises for example instructions about how parts of a displayed template should be rendered graphically to reflect the selected effects, and how the compatibility of various effects should be checked. As an example of compatibility checking, we may assume that not all possible patterns can be printed on all materials, or not all materials are available in all possible colours. It is advantageous to make such compatibility checking as immediately as possible when a user is making a new design, in order to avoid later disappointments when it turns out that some carefully crafted design is, after all, not possible to manufacture in practice.

The network interface part 1108 comprises for example instructions about how database queries, sticker orders, and other messages should be compiled in order to make them understandable to a database server, a service server or other remote devices. It should also comprise instructions about how messages from such remote devices should be interpreted.

The crypto and security part 1109 comprises for example instructions about how data related to the user's identity should be managed, how time-stamping of files and messages should be accomplished, how cryptographic operations should be performed and how files should be managed (e.g. by producing locked copies) at the user's computer.

According to an embodiment of the invention, a software program product such as that of fig. 10 or otherwise is stored on a medium in machine-readable form.

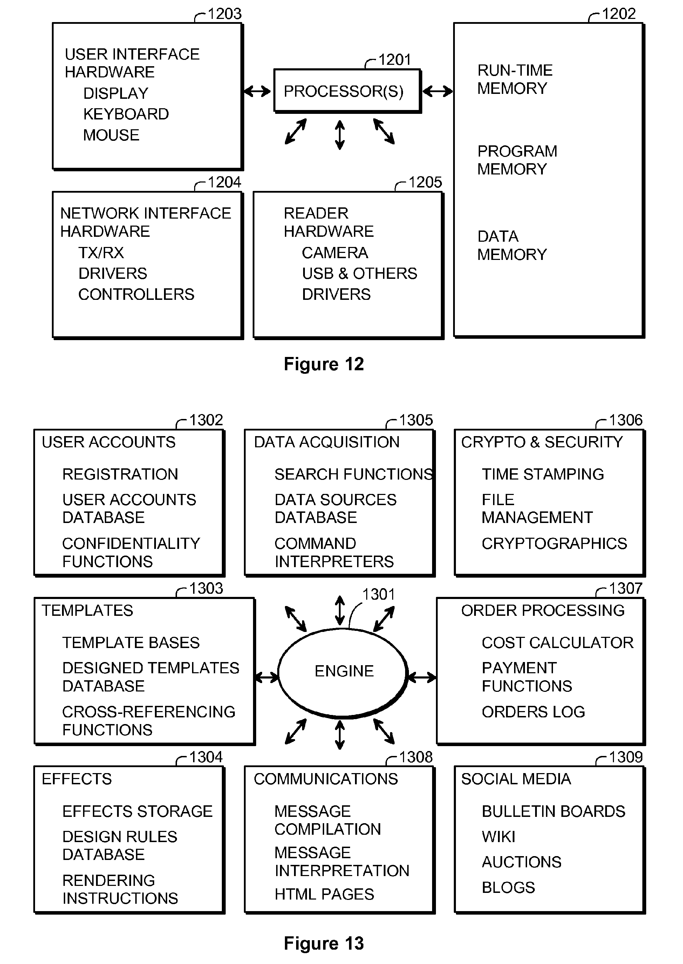

Fig. 12 illustrates an arrangement for designing an appearance of an object according to an embodiment of the invention. A processor part 1201 comprises one or more processors that are configured to execute software. A natural storage location for software is a non-volatile program memory in a memory part 1202, which may also comprise a run-time memory for storing run-time information and a data memory for storing data, which is understood to mean other digital data than executable software. A user interface part 1203 is provided for exchanging information with a human user, and comprises for example a display, a keyboard or keypad, and a mouse. It may also comprise other user interface devices such as a touchpad, a touch-sensitive display, a microphone, one or more loudspeakers and the like. A network interface part 1204 is provided for communicating with other electronic devices, and comprises for example transmitter and receiver circuitry, network adapter and/or driver boards, and/or controllers responsible for the implementation of network protocols (unless their implementation takes place in the processor part 1201). A reader part 1205 comprises means for locally acquiring data from outside the apparatus, and it may comprise e.g. a camera, a camera interface, a local bus interface (such as Universal Serial Bus, USB), and any driver boards required.

For the purposes of the present invention, the reader part 1205 comprises an automated reading apparatus. The processor part 1201 is configured to make the automated reading apparatus read identifiers of objects, and to form and transmit database queries that contain at least one of: a read identifiers, or identifying information derived therefrom, through the network interface part 1204. The processor part 1201 is further configured to receive database responses that contain information of at least one further characteristic of an object, and make the display in the user interface part 1203 display a template of a label, at least one characteristic of which is displayed to match said further characteristic of said object. Through a user input device in the user interface part 1203, the processor part 1201 is configured to receive user input indicative of a desired appearance of a physical label corresponding to the displayed template. The processor part 1201 is also configured to make the display in the user interface part 1203 display the template in conformity with indicated desired appearance. Finally, the processor part 1201 is configured to form and transmit orders for physical labels, said orders indicating the characteristics and appearance of at least one physical label as it was displayed.

Fig. 13 illustrates a server for interworking with the apparatus of fig. 12 for implementing a method according to an embodiment of the invention. Fig. 13 can also be understood as an illustration of server software needed to set up and maintain the server appropriately. An engine part 1301 is responsible for maintaining the operation of the server and for arranging the operation of the other parts of the server suitably. A user accounts part 1302 comprises the routines needed for the registration of users and to maintain the accounts of registered users. There may be for example the actual user accounts database, in which the user-related data of all registered users are stored, as well as the confidentiality functions that are needed to ensure that the confidential data of each user also stays confidential and cannot be accessed by any unauthorised party.

A templates part 1303 may be used as the server-side storage of all templates and related data, such as template bases (which are essentially just graphically representable objects for which various outer appearance parameters and text content can be defined) and designed templates (which have been produced e.g. by taking a template base and defining the graphical appearance of each part of it). The templates part 1303 may also comprise cross-referencing functions that make connections between parts of the template database, for example so that it is possible to retrieve all such designed templates that have a particular graphical element appearing on the spine part, or all templates that have been designed by independent designers for a particular book.

An effects part 1304 may be used to store all effects that can be applied to templates when designing, as well as the design rules that govern the use and potential mutual compatibility issues of various effects. The effects part 1304 may also comprise the rendering instructions related to each stored effect, so that the server may send to a remote user's computer not only information about the effect itself but also instructions about how the effect should be displayed.

A data acquisition part 1305 is dedicated to the expertise of how an object-specific identifier received in a database query should be mapped to whatever characteristics of the identified object can be found. For example, the data acquisition part 1305 may comprise a database of all available data sources, from which object characteristics may be found, as well as a list of search functions that are available in such data sources. The data acquisition part 1305 may also comprise command interpreters, if such are needed to convert a general form of a search function in a valid search command accepted by a particular data source and/or to interpret the description of object characteristics received from a particular data source to some more generally understandable form.

A crypto and security part 1306 is provided for implementing time stamping, file management and cryptography functions needed for secure communications with remote computers and for secure storage of confidential information at the server. An order processing part 1307 comprises those functions that are needed for processing orders for physical labels that the server receives from the users. It may comprise for example a cost calculator that user some sort of business rules to calculate the price for any particular order, as well as the payment functions that are needed to register and effect the payments that the users make for their orders. One possible way of implementing the payment functions is to make the server redirect the remote user's connection to the electronic payment service of a bank or a credit firm, but also other forms for implementing payments over a data network are known. It is advisable to also keep an order log at the server, which documents the orders and the actions taken upon the orders.

A communications part 1308 is provided for compiling and transmitting outgoing messages from the server, and for receiving and interpreting incoming messages at the server. In this embodiment of the invention also the HTML (HyperText Markup Language) pages that are to be sent to users' computers, including e.g. the Java applets to be executed at the users' computers, are part of the communications part 1308. Additionally fig. 13 illustrates a social media part 1309, which may comprise electronic bulletin boards, wikis, auction sites, and/or blogs, as well as other ways of introducing social media features to the server.

Various alternatives and further developments are possible to the basic embodiments of the invention discussed so far. For example, the user may be given the possibility to select during the designing and/or ordering stage, whether the physical sticker should contain an embedded RFID tag or other electronically readable identifier, which could contain information about the object (e.g. title, author, other bibliographic data, and/or text excerpts of a book) but alternatively or additionally also information about the sticker design. Adding such a custom-made electronically readable identifier to something that is meant to become a part of a book, for example, facilitates handling the book in one's own electronic library management system; or making the presence and/or contents of the book known to a table equipped with a wireless reader or other kinds of intelligent furniture; or allowing the sticker designing system of a friend to easily copy a template design which the friend has found appealing, if said system is capable of reading the custom-made electronically readable identifier.

Another further development is related to the use of the webcam or other digital camera which is one of the possible automated reading apparata that can be used in association with the invention. Such an image acquisition device can be used to take one or more pictures of the room or other environment in which the objects should be stocked. An extended version of the signal processing part considered above could be used to process said pictures in order to find out typical colours, forms, and/or other visual elements existing in the room, and this information could be further used to tailor the effects palette that is offered to the user when he or she is designing the stickers. For example, if the pictures reveal that the living room is done out mainly in green, the colour palette offered for the user may be tailored to contain especially a wide variety of different shades of green.

The data that is accumulated at the service server, when it processes the orders, will sooner or later form a relatively extensive database of what kinds of books, CDs, DVDs, and/or other kinds of objects a large number of people have at home. This database may be very valuable in enhancing the service offered to these people in the form of making more books, CDs, DVDs and the like available. With the consent of a user, the service server or some other computer to which the data is delivered may analyse the announced contents of the user's shelf and make anticipatory deductions about what else the user might be interested in. For example, if the data reveals that the user has parts 1, 2, 3 and 5 of a five-volume work, the user might be very interested to receive a call from a local book store asking whether he would like to buy the missing part 4 also. Or if the data reveals that the user has all novels that a particular author has published so far, the user would certainly be interested in a special offer of the next book coming from the same author. Thus, as a by-product of offering users the service of producing a groomed and uniform appearance for their books, the present invention also creates a valuable customer relationship management (CRM) database that can be used for various purposes.

Creating personal designs for objects involves also a large potential of becoming a social medium. Users who are interested in doing up their homes usually enjoy exchanging views and ideas with other, similarly minded people. Especially if copies of completed templates are stored in the service server, users may offer limited access to their user accounts also for others, so that creative users may e.g. display their own favourite designs and trade them with other users. For the purpose of trading it is advantageous to define the concept of "empty template" so that it can be for example a template for which colours, materials, graphical elements and the like have been selected already, but which has empty (or changeable) fields for book-specific data and which is scalable in size to meet any desired size of a book.

Above we have also assumed that a user will do the job of designing the stickers by himself. This is naturally not a limiting feature of the invention. One form of applying the present invention could be a turnkey service, in which a sticker operator comes to ones home or other location, agrees about basic design parameters with the owner, and thereafter performs the whole operation of reading identifiers, requesting data from a database, designing templates, and ordering stickers without needing the actual owner of the objects to intervene.

Yet a further alternative to what has been said above is the production of the stickers without resorting to a printing house. Many people already have a printer of reasonably good quality at their homes, which means that "ordering the stickers" may be accomplished simply by sending the print files to the local printer. However, since a professional printing house is still able to produce superior printing quality, and also because it may be advantageous to print on special materials and/or to cut the completed stickers with an automated cutting machine, it is assumed that for most users the best workable solution is to have a printing house print the stickers. From the viewpoint of the service provider it is also advantageous to make the orders go through a service server, because this way the service provider gets access to the valuable data that eventually form the CRM database mentioned above.

Also further changes and further developments to the above-described exemplary embodiments of the invention are possible without departing from the scope of protection defined by the appended claims.

## Claims

1. A method for designing an appearance of an object, comprising:
- having an automated reading apparatus read an identifier of said object,
- forming and transmitting a database query that contains at least one of: the read identifier, or identifying information derived therefrom,
- receiving a database response that contains information of at least one further characteristic of said object,
- displaying a template of a label, at least one characteristic of which is displayed to match said further characteristic of said object,
- receiving user input indicative of a desired appearance of a physical label corresponding to the displayed template, and displaying the template in conformity with indicated desired appearance, and
- forming and transmitting an order for said physical label, said order indicating the characteristics and appearance of the ordered physical label as they were displayed.

2. A method according to claim 1, wherein:
- said automated reading apparatus comprises an optical reader coupled to or built as a part of a computer, and
- said identifier is a printed identifier on the object itself, and has a form that is one of the following: a barcode, a matrix code, a character string.

3. A method according to any of claims 1 or 2, wherein:
- said object is a book, and said identifier is an International Standard Book Number.

4. A method according to claim 3, wherein:
- the step of having an automated reading apparatus read an identifier of said object corresponds to having a digital camera take a picture of a page of the book that contains the International Standard Book Number as a character string, and
- the method comprises running an optical character recognition program to recognize the characters of the International Standard Book Number.

5. A method according to any previous claim, wherein:
- identifiers of multiple objects are read with said automated reading apparatus, and
- said database query is made to contain, for each of said identifiers of multiple objects, at least one of: the read identifier, or identifying information derived therefrom.

6. A method according to any previous claim, wherein:
- templates of a multitude of labels are displayed consecutively, and at least one characteristic of each displayed template is displayed to match a further characteristic of an object to which the displayed template is displayed,
- user input indicative of a desired appearance of physical label is received corresponding to the multitude of displayed templates, and each time user input is received, the currently displayed template is displayed in conformity with desired appearance indicated by user input, and
- said order is made to indicate the characteristics and appearance of a multitude of ordered physical labels as they were displayed.

7. An arrangement for designing an appearance of an object, comprising:
- an automated reading apparatus,
- a processor part,
- a display,
- a user input device, and
- a network interface;
wherein the processor part is configured to
- make the automated reading apparatus read identifiers of objects,
- form and transmit database queries that contain at least one of: a read identifiers, or identifying information derived therefrom,
- receive database responses that contain information of at least one further characteristic of an object,
- make the display display a template of a label, at least one characteristic of which is displayed to match said further characteristic of said object,
- receive, through the user input device, user input indicative of a desired appearance of a physical label corresponding to the displayed template, and make the display display the template in conformity with indicated desired appearance, and
- form and transmit orders for physical labels, said orders indicating the characteristics and appearance of at least one physical label as it was displayed.

8. An arrangement according to claim 7, wherein:
- the arrangement comprises a computer; and
- the automated reading apparatus comprises an optical reader coupled to or built as a part of a computer.

9. An arrangement according to claim 8, wherein:
- said optical reader is a digital camera; and
- the arrangement comprises an optical character recognition part configured to recognize a barcode, a matrix code, or a character string from a picture taken by said digital camera.

10. A computer program product, comprising machine-readable instructions that, when executed on a processor, cause the implementation of:
- having an automated reading apparatus read an identifier of said object,
- forming and transmitting a database query that contains at least one of: the read identifier, or identifying information derived therefrom,
- receiving a database response that contains information of at least one further characteristic of said object,
- displaying a template of a label, at least one characteristic of which is displayed to match said further characteristic of said object,
- receiving user input indicative of a desired appearance of a physical label corresponding to the displayed template, and displaying the template in conformity with indicated desired appearance, and
- forming and transmitting an order for said physical label, said order indicating the characteristics and appearance of the ordered physical label as they were displayed.

11. A computer program product according to claim 10, wherein said machine readable instructions are stored on a medium in machine-readable form.
